# EUROPEAN PATENT SPECIFICATION

(11) **EP 3 405 947 B1**
(45) Date of publication and mention of the grant of the patent: **24.06.2026**
(21) Application number: 16856174.4
(22) Date of filing: 13.10.2016
(51) Int. Cl.: G10L 15/22, G10L 17/04, G10L 17/08

(54) **METHOD AND APPARATUS FOR INITIATING AN OPERATION USING VOICE DATA**
VERFAHREN UND VORRICHTUNG ZUM STARTEN EINER OPERATION MITTELS SPRACHDATEN
PROCÉDÉ ET APPAREIL D'INITIATION D'UNE OPÉRATION AU MOYEN DE DONNÉES VOCALES

(30) Priority: 14.10.2015 CN 201510662029
(43) Date of publication of application: 28.11.2018
(73) Proprietor: Alibaba Group Holding Limited, Grand Cayman (KY)
(72) Inventor: XU, Minqiang, Hangzhou, Jiangsu 311121 (CN); YAN, Zhijie, Hangzhou, Zhejiang 311121 (CN); GAO, Jie, Hangzhou, Zhejiang 311121 (CN); CHU, Min, Hangzhou, Zhejiang 311121 (CN)
(74) Representative: Finnegan Europe LLP
(86) International application number: PCT/US2016/056804
(87) International publication number: WO 2017/066424

(56) References cited:
- EP-A1- 0 686 297
- WO-A1-2014/109344
- WO-A1-2015/005927
- WO-A1-2015/081681
- US-A- 5 230 023
- US-A1- 2001 037 200
- US-A1- 2012 239 401
- US-A1- 2014 278 397
- US-A1- 2014 337 031
- US-A1- 2015 073 795
- US-A1- 2015 279 351
- US-A1- 2015 312 404
- GUTMAN DAN ET AL: "Speaker verification using phoneme-adapted Gaussian Mixture Models", EUROPEAN SIGNAL PROCESSING CONFERENCE, IEEE, 3 September 2002 (2002-09-03), pages 1 - 4, XP032754097, ISSN: 2219-5491, [retrieved on 20150327]

## Description

### TECHNICAL FIELD

The present application relates to the field of voice recognition, and more particularly to a method and an apparatus for initiating an operation using voice data.

### BACKGROUND

With the development of smart electronic devices, using voice commands to control the electronic devices, such as mobile phones, vehicle terminals, home devices and household appliances, has become a popular feature. Conventionally, voice control of an electronic device is realized based on voice recognition. An electronic device may perform voice recognition on received voice data, determine a control command according to the voice recognition result, and automatically execute the control command.

The feature of voice control provides conveniences to a user, but impersonation often occurs and causes security issues in some scenarios. For example, in a scenario where a mobile phone is unlocked by means of voice, an unauthorized individual may eavesdrop on what the user said and repeat the words to impersonate the user after stealing the mobile phone or after the user leaves. The unauthorized individual may then bypass the security protection measures (e.g., screen-lock) to unlock the mobile phone and steal the data in the mobile phone, resulting in loss to the user. In another example, in a scenario where household appliances are controlled by means of voice, children at home may frequently make voice commands to control the household appliances for fun. As a result, the household appliances may fail to function properly, and the children may even get hurt.

EP 0 686 297 A1 describes a voice command control and verification system and method which stores for each authorized user, one or a series of speech models of voice commands or phrases uttered by the authorized user. Each speech model has an associated action component which specifies the specific action. Each user has a means of asserting his or her claimed identity to the system, preferably without an overt action such as the entry of digits. When an identity is asserted, and a voice command is thereafter spoken by a person, the system first matches a model of the voice command against the stored models for the user having the claimed identity. If there is a match, the system then verifies the claimed identity of the user by comparing the vocal characteristics contained in the same command with the vocal characteristics of the stored model. Upon successful verification, the command is executed.

WO 2015/005927 A1 discloses an approach for using speaker verification for unlocking a device.

### SUMMARY

The present disclosure provides a method for initiating an operation using voice according to claim 1.

Consistent with some embodiments, this disclosure provides an apparatus for initiating an operation using voice according to claim 4.

Consistent with some embodiments, this disclosure provides a non-transitory computer readable medium according to claim 5.

Additional objects and advantages of the disclosed embodiments will be set forth in part in the following description, and in part will be apparent from the description, or may be learned by practice of the embodiments. The objects and advantages of the disclosed embodiments may be realized and attained by the elements and combinations set forth in the claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flowchart of an exemplary method for initiating an operation using voice, consistent with some embodiments of this disclosure.
FIG. 2 is a flowchart of another exemplary method for initiating an operation using voice, consistent with some embodiments of this disclosure.
FIG. 3 is a block diagram of an exemplary apparatus for initiating an operation using voice, consistent with some embodiments of this disclosure.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

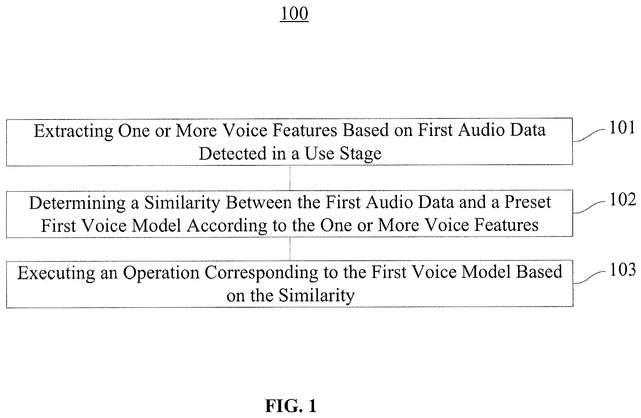

FIG. 1 is a flowchart of an exemplary method 100 for initiating an operation using voice. The exemplary method 100 may be performed by an electronic device. The electronic device may be a mobile device, such as a mobile phone, a tablet computer, a personal digital assistant (PDA), and a smart wearable device (e.g., spectacle and watch). The operating system of the mobile devices may be Android^{™}, iOS^{™}, Windows^{™} Phone, and Windows^{™}, and may support running of voice assistant applications. The electronic device may also be a stationary device, such as a smart television, a smart home device, and a smart household appliance. The type of electronic device is not limited by the disclosure of the present application. Referring to FIG. 1, the method 100 includes the following steps.

In step 101, the electronic device extracts one or more voice features based on first audio data detected in a use stage. In the present disclosure, the stage of presetting audio data of specific voice contents of a user is referred to as a registration stage, and the stage of verifying whether the current audio data matches the preset voice data of the user is referred to as a use stage. For example, when a user presets audio data "hello there, Little Tom" for unlocking of a mobile device, this stage is referred to as the registration stage. The specific voice contents of the user in the registration stage are preselected by the user. In embodiments not covered by the claims, the specific voice contents may be preselected by the electronic device or an application installed in the electronic device. After the registration, the screen of the mobile device is locked. When the mobile device in the screen-lock state and the screen is turned on, the user may repeat "hello there, Little Tom." During this period, the mobile device monitors a microphone input and determines whether to perform an unlock operation, and this stage may be referred to as the use stage.

In some embodiments, step 101 may include the following sub-steps.

In sub-step S11, the electronic device determines whether the first audio data is voice data after the first audio data is detected in the use stage. If yes, the electronic device performs sub-step S12; and if not, the electronic device performs sub-step S13.

In some implementations, a voice assistant application is installed in the electronic device and needs to provide services for a user at any time, where the voice assistant application continuously collects audio data in the environment. The audio data may be voice data sent by the user or by other users, and may also be noises. In some embodiments, the short-term energy feature and the time-frequency variance summation feature of the audio data may be extracted and used as input of a neural network for training, and the neural network may determine whether the audio data is voice data or noises accordingly. For example, the quantity of input nodes of the neural network may equal the quantity of feature dimensions of the audio data, and the quantity of output nodes may be set as one. If the numerical value at the output is greater than a preset value (e.g., 0.5), the audio data is determined as voice data; otherwise, the audio data is determined as non-voice data.

In sub-step S12, the electronic device extracts the voice features of the first audio data.

In sub-step S13, the electronic device discards the first audio data.

In step 101, voice activity detection (VAD) may be performed on the detected first audio data. A subsequent test process may be performed on the part of voice data (that is, sound made by human being), and the part of non-voice data may be discarded. By selecting the voice data for detection and discarding the non-voice data, the amount of computation is reduced, thereby reducing the power consumption of the device.

In some embodiments, step 101 may include the following sub-steps.

In sub-step S14, the electronic device segments the first audio data into one or more pieces of voice segment data. Each piece of the voice segment data represents a voice content, and the voice content in each piece of the voice segment data is a independent from one another. For example, if the user produces first audio data with the voice content of "hello there, Little Tom", the first audio data may be segmented into four pieces of voice segment data with the voice contents of "hello", "there", "Little", "Tom".

In some implementations, segmenting points of the audio data are estimated, and the first audio data is segmented into one or more pieces of voice segment data at the segmenting points. For example, each frame of the first audio data may be determined to correspond to a pre-trained first voice model by means of force alignment using a dynamic programming (DP) algorithm.

In sub-step S15, the electronic device extracts one or more voice features of each piece of the voice segment data.

In some embodiments, to reduce the amount of computation, the extracted features may include the Mel Frequency Cepstral Coefficients (MFCC). The Mel frequency is a scale formed based on human auditory features and has a non-linear corresponding relation with the Hz frequency. The MFCC is an Hz spectral feature determined based on the corresponding relation between the Mel frequency and the Hz frequency. Other features may also be extracted, such as prosodic features, which are not limited by the present disclosure.

In step 102, the electronic device determines a similarity between the first audio data and a preset first voice model according to the one or more voice features.

In some embodiments, the first voice model is generated by training with second audio data provided by the user in the registration stage, representing the audio data of the specific voice contents of the user. The specific voice contents are preselected by the user. In embodiments not covered by the claims, the specific voice contents may be preselected by the electronic device or an application installed in the electronic device.

In some embodiments, the first voice model may be a Gaussian mixture model (GMM). For example, an object may be quantized by using a Gaussian probability density function (normal distribution curve) and decomposed into several models formed by linear superposition based on the Gaussian probability density function (normal distribution curve). According to the Bayesian theory, the GMM model describes the voice contents of a person by probability. The first voice model may also be another model, such as a vector quantization (VQ) model or a support vector machine (SVM) model, which is not limited by the present disclosure.

In some embodiments, the first voice model includes one or more voice sub-models, where each voice sub-model is generated by training with the second audio data of the user in the registration stage. For example, the user sets the second audio data with the voice contents of "hello there, Little Tom", and four voice sub-models may be respectively trained using the second audio data with the voice contents of "hello", "there", "Little", "Tom," respectively.

In some embodiments, the voice sub-model may be a GMM model. The voice sub-model may also be another model, such as a VQ model or an SVM model, which is not limited by the present disclosure.

In some embodiments, step 102 may include the following sub-steps.

In sub-step S21, the electronic device identifies a voice sub-model corresponding to each piece of the voice segment data according to the segmenting order.

In some implementations, each piece of the voice segment data may be compared with the corresponding voice sub-model according to the DP algorithm. For example, the i^{th} piece of the voice segment data is compared with the i^{th} voice sub-model, where i is a positive integer.

In sub-step S22, the electronic device determines the voice segment similarity between one or more voice features of each piece of the voice segment data and the voice sub-model.

In some implementations, the voice segment similarity may be determined by using a log-likelihood function. For example, if the user produces the first audio data with the voice contents of "hello there, Little Tom," the voice segment data with the voice content of "hello" is compared with the voice sub-model with the voice content of "hello" for determining the voice segment similarity, the voice segment data with the voice content of "there" is compared with the voice sub-model with the voice content of "there" for determining the voice segment similarity, the voice segment data with the voice content of "Little" is compared with the voice sub-model with the voice content of "Little" for determining the voice segment similarity, and the voice segment data with the voice content of "Tom" is compared with the voice sub-model with the voice content of "Tom" for determining the voice segment similarity. It is to be appreciated that other manners may be used to determine the voice segment similarity, which are not limited by the present disclosure.

In sub-step S23, the electronic device determines the similarity between the first audio data and the first voice model according to each voice segment similarity.

In some embodiments, the voice segment similarities (for example, values of the log-likelihood function) may be averaged to obtain the similarity between the first audio data and the first voice model, which may be referred to as scoring. It is to be appreciated that other manners may be used to determine the similarity, such as direct summation or weighted averaging, which are not limited by the present disclosure.

In some embodiments, after the similarity is obtained, the similarity may be normalized, for example, adjusted to fall in the range of [0-100], and after the normalization, the dynamic range of the similarity is narrowed and the physical explanation of the similarity is intuitive.

In step 103, the electronic device executes an operation corresponding to the first voice model based on the similarity.

If the similarity is greater than a preset similarity threshold, an operation corresponding to the first voice model is executed. Generally, a higher similarity indicates that the first audio data of the current speaker is similar to the second audio data of the user. If the similarity is greater than (or equal to, in some embodiments) a preset similarity threshold, it is considered that the first audio data of the current speaker is identical to the second audio data of the user, and a preset operation, such as a preset application operation, is executed. Otherwise, it is considered that the first audio data of the current user is not identical to the second audio data of the user, and the reason may be that the identity of the speaker is not matching, the voice content is not matching, or both the identity and the voice content are not matching.

In the case of a screen-lock state in the use stage, the operation includes an unlock operation and starting of a specified application (e.g., voice assistant application). Other operations may also be set, such as payment, account login and security verification through fingerprint and password, which are not limited by the present disclosure.

In the method 100, the detected first audio data is compared with the first voice model representing the audio data features of the specific voice contents of the user, and the voice and identity recognition of a specific person is performed for executing a corresponding operation. In doing so, personalized voice control is realized, the chance of impersonation is reduced, and the security of voice control is improved.

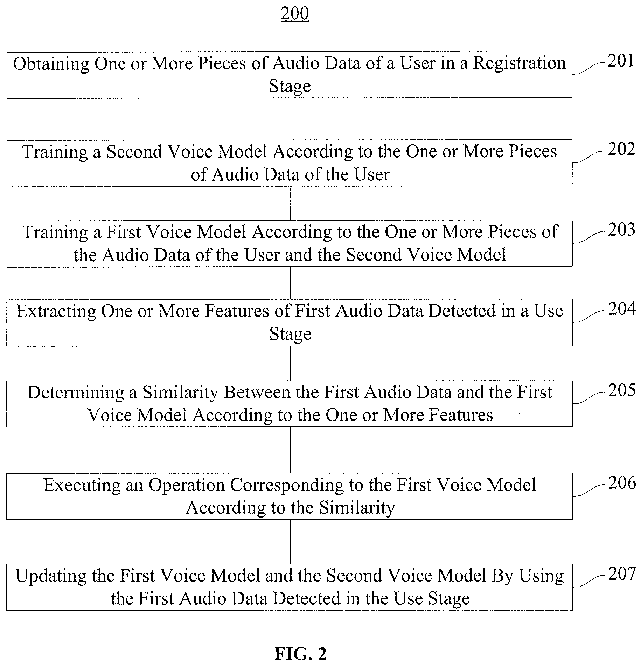

FIG. 2 is a flowchart of another exemplary method 200 for initiating an operation using voice, consistent with some embodiments of this disclosure. The exemplary method 200 may be performed by an electronic device. Referring to FIG. 2, the method 200 includes the following steps.

In step 201, the electronic device obtains one or more pieces of audio data of a user in a registration stage. During initial setting in the registration stage, the user may speak specific voice contents (for example, "hello there, Little Tom") once or several times (for example, three times), so as to facilitate the device to learn about the voice of the user. The specific voice contents are preselected by the user. In embodiments not covered by the claims, the specific voice contents may be preselected by the electronic device or an application installed in the electronic device. For example, the specific voice contents may be set by the electronic device as a default, such as "hello there, Little Tom," or may be defined by the user, such as "open sesame," which are not limited by the present disclosure.

In some embodiments, step 201 may include the following sub-steps.

In sub-step S41, the electronic device determines whether a piece of the audio data is voice data after the piece of audio data is detected in the registration stage. If the piece of audio data is voice data, the electronic device performs sub-step S42; and if the piece of audio data is not voice data, the electronic device performs sub-step S43.

In sub-step S42, the electronic device determines that the piece of audio data is audio data of the user.

In sub-step S43, the electronic device discards the piece of audio data.

In some embodiments, VAD may be performed on the detected piece of audio data, a subsequent initialization process may be performed on the part of voice data (that is, sound made by people), and the part of non-voice data is discarded. Selecting the voice data for initialization and discarding the non-voice data reduces the amount of computation, thereby reducing the power consumption of the device.

In step 202, the electronic device trains a second voice model according to the one or more pieces of audio data of the user.

In some embodiments, the second voice model is generated by training with audio data of non-specific voice contents of the user in the registration stage, representing the audio data features of the non-specific voice contents of the user. The non-specific voice contents may be different from the preselected specific contents, and the order of the audio contents are not concerned in this step.

In some embodiments, the second voice model may be a GMM model. The second voice model may also be another model, such as a VQ model or an SVM model, which is not limited by the present disclosure.

In some embodiments, step 202 may further include the following sub-steps.

In sub-step S51, the electronic device identifies a preset third voice model. The third voice model may be generated by training with audio data of non-specific voice contents of an ordinary person (i.e., a non-user speaker), and represents the audio data features of the non-specific voice contents of the non-user speaker. The non-specific voice contents may be different from the preselected voice contents detected in the registration stage. The preset third voice model may be called a global voice model as it may be unrelated to the user and unrelated to the spoken content.

In some embodiments, the third voice model may be a GMM model. According to the Bayesian theory, the global GMM model describes general features of the human voice and represents priori probability knowledge for training the second voice model. The third voice model may also be another model, such as a VQ model or an SVM model, which is not limited by the present disclosure. The duration of the audio data for training the GMM model may last for several hours or dozens of hours, the number of speakers may reach hundreds, and the mixing degrees may be high (generally 256 to 4096 mixing degrees). In some implementations, the voice features of the audio data are extracted, and the GMM model is obtained by training according to an expectation maximization (EM) algorithm.

In sub-step S52, the electronic device trains the second voice model by using one or more pieces of the audio data of the user and the third voice model.

In some embodiments, an updated second voice model (for example, GMM model) may be obtained by training according to the audio data of the user and the third voice model using maximum a posteriori (MAP). For example, the assumption of maximum probability when specified data is searched in a candidate assumption set is called MAP, and the MAP may be determined by using a Bayesian formula to determine a posteriori probability of each candidate assumption. Each Gaussian in the global GMM model (e.g., the third voice model) corresponds to a phoneme or a phoneme class, and because the training data comes from many different speakers and different backgrounds, the statistical distribution described by the global GMM model represents statistical distribution of features of ordinary speakers and statistical distribution of the background features.

In some embodiments, the second voice model may also be a GMM model, may have the same mixing degree as the global GMM model. The second voice model may be obtained by adapting voice data of the user to the global GMM model by means of the MAP algorithm. By using the MAP algorithm, even if the amount of the voice data of the user is small, estimation of the parameters of the GMM model (e.g., the second voice model) can be relatively accurate.

Through the MAP algorithm, one-to-one correspondences of the Gaussian probability density functions are established between the second voice model and the third voice model. Such correspondences may effectively compensate the impact of the voice phoneme and highlight individual information of the user.

In step 203, the electronic device trains a first voice model according to one or more pieces of the audio data of the user and the second voice model.

If the MFCC feature parameter is adopted, the GMM model obtained by training using the EM algorithm represents voice features of the registrant (that is, the user). Because the second voice model uses all the registered voices and does not consider the spoken contents in different time sequences, the GMM model may be unrelated to the contents expressed in the registered voices and unrelated to the order of the contents, and represent voice features of the registrant unrelated to the voice contents. In this case, the GMM model obtained by training with the voice contents "hello there, Little Tom" or "Little Tom, hello there" may be basically the same.

In some embodiments, to detect whether the voice contents are identical, that is, to distinguish "hello there, Little Tom" and "Little Tom, hello there", a time period-based multi-voice sub-model scheme may be implemented. For example, a voice sub-model may be established for audio data in each time period, where the voice sub-model describes the voice of a specific content of the registrant in a specific time period. Thus, the first voice model may include one or more voice sub-models, and each voice sub-model represents audio data of a specific voice content of the user. Multiple voice sub-models may then be combined, and the voiceprint features of the registrant can be described. By implementing the time period-based multi-voice sub-model scheme, the first voice model can distinguish a user and an impersonator, and can also distinguish the difference in the voice contents such as "hello there, Little Tom" and "Little Tom, hello there".

In some embodiments, step 203 may include the following sub-steps.

In sub-step S61, the electronic device segments each piece of the audio data of the user into one or more pieces of voice segment data.

In some implementations, segmenting points of the audio data are estimated and the audio data is segmented into one or more pieces of voice segment data at the segmenting points by DP alignment. Each piece of the voice segment data represents a voice content that is independent from one another. For example, if the user produces audio data with the voice content of "hello there, Little Tom", the audio data may be segmented into four pieces of voice segment data with the voice contents of "hello", "there", "Little", and "Tom".

In sub-step S62, the electronic device extracts at least one voice feature of each piece of the voice segment data.

In some embodiments, to reduce the amount of computation, the extracted feature may be an MFCC. The extracted feature may also be other features, such as prosodic features, which are not limited by the present disclosure.

In sub-step S63, the electronic device trains the first voice model by using the at least one voice feature of each piece of the voice segment data and the second voice model.

In some embodiments, the first voice model (for example, GMM model) may be obtained by training according to the audio data of the user and the second voice model using MAP, so as to represent audio data features of the specific voice contents of the user.

In step 204, the electronic device extracts one or more voice features of first audio data detected in the use stage.

In step 205, the electronic device determines the similarity between the first audio data and the first voice model according to the one or more voice features of the first audio data. The first voice model is a voice model representing audio data features of specific voice contents of the user.

In step 206, the electronic device executes an operation corresponding to the first voice model according to the similarity.

In step 207, the electronic device updates the first voice model and the second voice model by using the first audio data detected in the use stage.

In the registration stage, to improve the user experience, the registration can be completed usually if the user speaks a few times (for example, 2 to 5 times). The more the user speaks, the better the model is trained, and the system recognition accuracy is higher. Therefore, the "training" method is adopted in method 200 to obtain more audio data of the target user.

In the use stage, if the similarity is higher than a preset similarity threshold after the first audio data is compared with the first voice model, it may be determined that the piece of audio data is from the user, and the specific voice content is marked and can be used for updating the existing first voice model and second voice model. It should be noted that, the similarity threshold may be different from the similarity determined in step 205, and the similarity threshold may be a higher value.

In method 200, the first voice model and the second voice model are continuously updated by using the audio data in the use stage. In doing so, the accuracy of the first voice model and the second voice model is improved, and the recognition accuracy of the audio data in the use stage is improved.

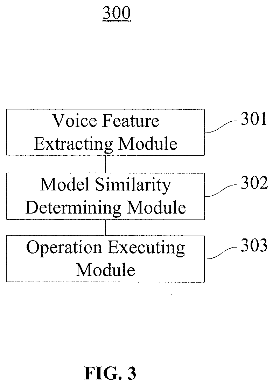

FIG. 3 is a block diagram of an exemplary apparatus 300 for initiating an operation using voice, consistent with some embodiments of this disclosure. The apparatus 300 may be implemented as a part or all of an electronic device described above in connection with FIGs. 1 and 2. Referring to FIG. 3, the apparatus 300 includes a voice feature extracting module 301, a model similarity determining module 302, and an operation executing module 303. Each of these modules (and any corresponding sub-modules) can be packaged functional hardware unit designed for use with other components (e.g., portions of an integrated circuit) or a part of a program (stored on a computer readable medium) that performs a particular function of related functions.

The voice feature extracting module 301 is configured to extract one or more voice features based on first audio data detected in a use stage.

The model similarity determining module 302 is configured to determine the similarity between the first audio data and a preset first voice model according to the one or more voice features, where the first voice model is associated with audio data features of specific voice contents of a user. The specific voice contents are preselected by the user. In embodiments not covered by the claims, the specific voice contents may be preselected by an electronic device or an application installed in the electronic device.

The operation executing module 303 is configured to execute an operation corresponding to the first voice model based on the similarity.

In some embodiments, the voice feature extracting module 301 may further include a first voice data determining sub-module, a first extracting sub-module, and a first discarding sub-module (not shown). The first voice data determining sub-module is configured to determine whether the first audio data is voice data after the first audio data is detected in the use stage. If the first audio data is voice data, the first extracting sub-module is invoked. If the first audio data is not voice data, the discarding sub-module is invoked. The first extracting sub-module is configured to extract one or more voice features of the first audio data. The first discarding sub-module is configured to discard the first audio data.

In some embodiments, the voice feature extracting module 301 may further include a first segmenting sub-module and a second extracting sub-module (not shown). The first segmenting sub-module is configured to segment the first audio data into one or more pieces of voice segment data, where each piece of the voice segment data is associated with separate voice content. The second extracting sub-module is configured to extract at least one voice feature from each piece of the voice segment data.

In some embodiments, the first voice model includes one or more voice sub-models, and each voice sub-model is associated with audio data of a specific voice content of the user.

In some embodiments, the model similarity determining module 302 may include a voice sub-model identifying sub-module, a voice segment similarity determining sub-module, and a similarity determining sub-module (not shown). The voice sub-model identifying sub-module is configured to identify a voice sub-model corresponding to each piece of the voice segment data according to the segmenting order. The voice segment similarity determining sub-module is configured to determine the segment similarity between the one or more voice features in each piece of the voice segment data and the voice sub-model. The similarity determining sub-module is configured to determine the similarity between the first audio data and the first voice model according to each segment similarity.

In some embodiments, the operation executing module 303 may include an executing sub-module. The executing sub-module is configured to execute an operation corresponding to the first voice model, such as an application operation, if the similarity is greater than a preset similarity threshold. For example, in the case of a screen-lock state in the use stage, the operation may include an unlock operation and starting of a preset application.

In some embodiments, the apparatus 300 may further include an audio data obtaining module, a second voice model training module, and a first voice model training module (not shown). The audio data obtaining module is configured to obtain one or more pieces of audio data of the user in the registration stage. The second voice model training module is configured to train a second voice model according to one or more pieces of the audio data of the user, where the second voice model is associated with audio data features of non-specific voice contents of the user. The first voice model training module is configured to train the first voice model according to one or more pieces of the audio data of the user and the second voice model.

In some embodiments, the audio data obtaining module may further include a second voice data determining sub-module, a determining sub-module, and a second discarding sub-module. The second voice data determining sub-module is configured to determine whether each of the one or more pieces of audio data is voice data after the one or more pieces of audio data are detected in the registration stage. If a piece of audio data is voice data, the determining sub-module is invoked. If a piece of audio data is not voice data, the second discarding sub-module is invoked. The determining sub-module is configured to determine that the piece of audio data is the audio data of the user. The second discarding sub-module is configured to discard the piece of audio data.

In some embodiments, the second voice model training module may include a third voice model identifying sub-module and a first training sub-module. The third voice model identifying sub-module is configured to identify a preset third voice model, where the third voice model is associated with audio data features of non-specific voice contents of a non-user speaker. The first training sub-module is configured to train the second voice model by using one or more pieces of the audio data of the user and the third voice model.

In some embodiments, the first voice model may include one or more voice sub-models. The first voice model training module may include a second segmenting sub-module, a third extracting sub-module, and a second training sub-module. The second segmenting sub-module is configured to segment each piece of the audio data of the user in the registration stage into one or more pieces of voice segment data, where each piece of the voice segment data is associated with voice content. The third extracting sub-module is configured to extract one or more voice features from each piece of the voice segment data. The second training sub-module is configured to train the first voice model by using the one or more voice features of each piece of the voice segment data and the second voice model.

In some embodiments, the apparatus 300 may further include a model updating module configured to update the first voice model and the second voice model by using the first audio data detected in the use stage.

In exemplary embodiments, the electronic device described above may include a processor, a network interface, an input/output interface, and a memory. The memory may store instructions that when executed by the processor, causing the device or server to perform the above-described methods. The memory may include a tangible and/or non-transitory computer-readable medium, such as a random access memory (RAM), and/or other forms of nonvolatile memory, such as read only memory (ROM) or flash RAM. The non-transitory computer-readable storage medium includes instructions executable by a processor in a device or a server for performing the above-described methods. For example, the non-transitory computer-readable storage medium can include a phase change memory (the PRAM), static random access memory (SRAM), dynamic random access memory (DRAM), other types of random access memory (RAM), electrically erasable programmable read-only memory (EEPROM), flash memory or other memory technology, a cache, a register, CD-ROM, digital versatile disk (DVD), or other optical storage, magnetic cassettes, magnetic tape, or other magnetic disk storage devices, etc.

One of ordinary skill in the art will understand that the above described embodiments (e.g., the modules of FIG. 3) can be implemented by hardware, software, or a combination of hardware and software. If implemented by software, it may be stored in the above-described computer-readable medium. The software, when executed by the processor can perform the disclosed methods. The computing modules and the other functional modules described in this disclosure can be implemented by hardware, or software, or a combination of hardware and software. It is appreciated that multiple ones of the above described modules may be combined as one module, and each of the above described units may be further divided into a plurality of sub-modules.

Other embodiments of the invention will be apparent to those skilled in the art from consideration of the specification and practice of the invention disclosed here. The illustrated steps are set out to explain the exemplary embodiments shown, and it should be anticipated that ongoing technological development will change the manner in which particular functions are performed. These examples are presented herein for purposes of illustration, and not limitation. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention should only be limited by the appended claims.

## Claims

1. A method for initiating an operation using voice, comprising:
extracting (101) one or more voice features based on first audio data by segmenting the first audio data into one or more pieces of voice segment data, wherein each piece of the voice segment data represents a voice content that is independent from another of each piece of the voice segment data, and extracting one or more voice features of each piece of the voice segment data;
determining (102) a similarity between the first audio data and a preset first voice model according to the one or more voice features, wherein the first voice model is associated with second audio data of a user, and the second audio data is associated with one or more preselected specific voice contents of the user, wherein the one or more preselected specific voice contents of the user are preselected by the user, and wherein the user may speak the specific voice contents once or several times; and
executing (103) an operation corresponding to the first voice model when the similarity is greater than a preset similarity threshold,
wherein a screen of a device is in a screen-lock state, and wherein the operation corresponding to the first voice model comprises an unlock operation and a starting of an application.

2. The method according to claim 1, wherein the step of extracting (101) one or more voice features comprises:
determining whether the first audio data is voice data;
if the first audio data is voice data, extracting the one or more voice features based on the first audio data; and
if the first audio data is not voice data, discarding the first audio data.

3. The method according to claim 1,
wherein the preset first voice model comprises one or more voice sub-models, and each voice sub-model is associated with audio data of a predetermined voice content of the user, and
wherein the step of determining the similarity between the first audio data and a preset first voice model comprises:
identifying a voice sub-model corresponding to each piece of the voice segment data according to a segmenting order;
determining the voice segment similarity between the one or more voice features of each piece of the voice segment data and the voice sub-model; and
determining the similarity between the first audio data and the first voice model according to each voice segment similarity.

4. An apparatus for initiating an operation using voice, comprising:
a processor; and
a memory storing instructions which, when executed by the processor, cause the apparatus to perform the method according to any of the preceding claims.

5. A non-transitory computer readable medium that stores a set of instructions that is executable by at least one processor of an electronic device to cause the electronic device to perform the method for initiating an operation using voice according to any of claims 1 to 3.

## Patentansprüche

1. Verfahren zum Starten einer Operation unter Verwendung von Sprache, umfassend:
Extrahieren (101) eines oder mehrerer Sprachmerkmale basierend auf ersten Audiodaten durch Segmentieren der ersten Audiodaten in ein oder mehrere Teile von Sprachsegmentdaten, wobei jeder Teil der Sprachsegmentdaten einen Sprachinhalt darstellt, der von einem anderen Teil der Sprachsegmentdaten unabhängig ist, und Extrahieren eines oder mehrerer Sprachmerkmale jedes Teils der Sprachsegmentdaten;
Bestimmen (102) einer Ähnlichkeit zwischen den ersten Audiodaten und einem voreingestellten ersten Sprachmodell gemäß dem einen oder den mehreren Sprachmerkmalen, wobei das erste Sprachmodell zweiten Audiodaten eines Benutzers zugeordnet ist und die zweiten Audiodaten einem oder mehreren vorausgewählten spezifischen Sprachinhalten des Benutzers zugeordnet sind, wobei der eine oder die mehreren vorausgewählten spezifischen Sprachinhalte des Benutzers durch den Benutzer vorausgewählt sind und wobei der Benutzer die spezifischen Sprachinhalte einmal oder mehrmals sprechen kann; und
Ausführen (103) einer Operation, die dem ersten Sprachmodell entspricht, wenn die Ähnlichkeit größer als ein voreingestellter Ähnlichkeitsschwellenwert ist,
wobei sich ein Bildschirm einer Einrichtung in einem Bildschirmsperrzustand befindet und wobei die Operation, die dem ersten Sprachmodell entspricht, eine Entsperroperation und ein Beginnen einer Anwendung umfasst.

2. Verfahren nach Anspruch 1, wobei der Schritt des Extrahierens (101) eines oder mehrerer Sprachmerkmale Folgendes umfasst:
Bestimmen, ob die ersten Audiodaten Sprachdaten sind;
falls die ersten Audiodaten Sprachdaten sind, Extrahieren des einen oder der mehreren Sprachmerkmale basierend auf den ersten Audiodaten; und
falls die ersten Audiodaten keine Sprachdaten sind, Verwerfen der ersten Audiodaten.

3. Verfahren nach Anspruch 1,
wobei das voreingestellte erste Sprachmodell ein oder mehrere Sprachuntermodelle umfasst und jedes Sprachuntermodell Audiodaten eines vorbestimmten Sprachinhalts des Benutzers zugeordnet ist, und
wobei der Schritt des Bestimmens der Ähnlichkeit zwischen den ersten Audiodaten und einem voreingestellten ersten Sprachmodell Folgendes umfasst:
Identifizieren eines Sprachuntermodells, das jedem Teil der Sprachsegmentdaten entspricht, gemäß einer Segmentierungsreihenfolge;
Bestimmen der Sprachsegmentähnlichkeit zwischen dem einen oder den mehreren Sprachmerkmalen jedes Teils der Sprachsegmentdaten und dem Sprachuntermodell; und
Bestimmen der Ähnlichkeit zwischen den ersten Audiodaten und dem ersten Sprachmodell gemäß jeder Sprachsegmentähnlichkeit.

4. Vorrichtung zum Starten einer Operation unter Verwendung von Sprache, umfassend:
einen Prozessor; und
einen Speicher, der Anweisungen speichert, die, wenn sie durch den Prozessor ausgeführt werden, bewirken, dass die Vorrichtung das Verfahren nach einem der vorhergehenden Ansprüche durchführt.

5. Nichtflüchtiges computerlesbares Medium, das einen Satz von Anweisungen speichert, der durch mindestens einen Prozessor einer elektronischen Einrichtung ausführbar ist, um zu bewirken, dass die elektronische Einrichtung das Verfahren zum Starten einer Operation unter Verwendung von Sprache nach einem der Ansprüche 1 bis 3 durchführt.

## Revendications

1. Procédé d'initiation d'une opération au moyen de la voix, comprenant :
l'extraction (101) d'une ou de plusieurs caractéristiques vocales sur la base de premières données audio en segmentant les premières données audio en un ou plusieurs éléments de données de segment vocal, dans lequel chaque élément des données de segment vocal représente un contenu vocal qui est indépendant d'un autre de chaque élément des données de segment vocal, et l'extraction d'une ou de plusieurs caractéristiques vocales de chaque élément des données de segment vocal ;
la détermination (102) d'une similitude entre les premières données audio et un premier modèle vocal prédéfini selon les une ou plusieurs caractéristiques vocales, dans lequel le premier modèle vocal est associé à de secondes données audio d'un utilisateur, et les secondes données audio sont associées à un ou plusieurs contenus vocaux spécifiques présélectionnés de l'utilisateur, dans lequel les un ou plusieurs contenus vocaux spécifiques présélectionnés de l'utilisateur sont présélectionnés par l'utilisateur, et dans lequel l'utilisateur peut prononcer les contenus vocaux spécifiques une ou de multiples fois ; et
l'exécution (103) d'une opération correspondant au premier modèle vocal lorsque la similitude est supérieure à un seuil de similitude prédéfini,
dans lequel un écran d'un dispositif est dans un état de verrouillage d'écran, et dans lequel l'opération correspondant au premier modèle vocal comprend une opération de déverrouillage et un démarrage d'une application.

2. Procédé selon la revendication 1, dans lequel l'étape d'extraction (101) d'une ou de plusieurs caractéristiques vocales comprend :
le fait de déterminer si les premières données audio sont des données vocales ;
si les premières données audio sont des données vocales, l'extraction des une ou plusieurs caractéristiques vocales sur la base des premières données audio ; et
si les premières données audio ne sont pas des données vocales, la suppression des premières données audio.

3. Procédé selon la revendication 1,
dans lequel le premier modèle vocal prédéfini comprend un ou plusieurs sous-modèles vocaux, et chaque sous-modèle vocal est associé à des données audio d'un contenu vocal prédéterminé de l'utilisateur, et
dans lequel l'étape de détermination de la similitude entre les premières données audio et un premier modèle vocal prédéfini comprend :
l'identification d'un sous-modèle vocal correspondant à chaque élément des données de segment vocal selon un ordre de segmentation ;
la détermination de la similitude de segment vocal entre les une ou plusieurs caractéristiques vocales de chaque élément des données de segment vocal et le sous-modèle vocal ; et
la détermination de la similitude entre les premières données audio et le premier modèle vocal selon la similitude de chaque segment vocal.

4. Appareil d'initiation d'une opération au moyen de la voix, comprenant :
un processeur ; et
une mémoire stockant des instructions qui, lorsqu'elles sont exécutées par le processeur, amènent l'appareil à réaliser le procédé selon l'une quelconque des revendications précédentes.

5. Support lisible par ordinateur non transitoire qui stocke un ensemble d'instructions qui peuvent être exécutées par au moins un processeur d'un dispositif électronique pour amener le dispositif électronique à réaliser le procédé d'initiation d'une opération au moyen de la voix selon l'une quelconque des revendications 1 à 3.
